# EUROPEAN PATENT SPECIFICATION

(11) **EP 0 525 615 B1**
(45) Date of publication and mention of the grant of the patent: **26.03.1997**
(21) Application number: 92112532.4
(22) Date of filing: 22.07.1992
(51) Int. Cl.: G03B 27/58

(54) **Package comprising a flexible light-tight enclosure for a photosensitive web roll and method therefor**
Verpackung mit einer biegsamen, lichtdichten Hülle für Rollen von photoempfindlichem Gewebe und deren Herstellungsverfahren
Emballage comprenant une enveloppe flexible étanche à la lumière pour un rouleau photosensible et son procédé de fabrication

(30) Priority: 31.07.1991 US 738720; 31.07.1991 US 739016
(43) Date of publication of application: 03.02.1993
(73) Proprietor: EASTMAN KODAK COMPANY, Rochester, New York 14650-2201 (US)
(72) Inventor: Harris, Clark Eugene, c/o EASTMAN KODAK COMPANY, Rochester, New York 14650-2201 (US); Stone, Julie Diane, c/o EASTMAN KODAK COMPANY, Rochester, New York 14650-2201 (US); Healey, Thomas Charles, c/o EASTMAN KODAK COMPANY, Rochester, New York 14650-2201 (US); Szwejbka, Paul Joseph, c/o EASTMAN KODAK COMPANY, Rochester, New York 14650-2201 (US)
(74) Representative: Blickle, K. Werner, Dipl.-Ing.

(56) References cited:
- EP-A- 0 196 577
- US-A- 4 956 908

## Description

### BACKGROUND OF THE INVENTION

### Field of the Invention

The present invention relates generally to enclosures and method for enclosing photosensitive material, and particularly to a flexible enclosure adapted to light-tightly store and dispense a roll of photosensitive web material.

### Description of the Prior Art

Heretofore, photosensitive color-print paper has been supplied to minilab stations in either of two different types of container. One is a paper bag, the other an injection-molded disposable cartridge. Each protects the paper stock roll therein from physical damage and light. The disposable cartridge is both costly and wasteful. The most popular paper bag must be unloaded in the dark, in order to safely transfer its stock roll to a cartridge used by the minilab. Such work in the dark can be awkward and time-consuming. There has thus been a need for a practical, convenient, and reliable light-tight enclosure in which a photosensitive paper stock roll can be efficiently supplied to a minilab station without requiring the operator to work in the dark, preferably such an enclosure that can be daylight-loaded into either a minilab cartridge or the minilab machine itself, and preferably such an enclosure that is not only economical to make and use but also readily recyclable for further use of its constituent parts.

In the prior art, U.S. Patent No. 3,612,424 discloses a generally rigid storage and dispensing magazine for rolled strips of light-sensitive material, comprising a cylindrical housing with inwardly directed core-mounting hubs at opposite ends thereof and a tangentially extending dispensing spout. While the magazine there disclosed may have sufficed for its intended purpose, it does not fulfill the present need set forth hereinabove. Another similar storage is disclosed in EP-A-0 196 577.

### SUMMARY OF THE INVENTION

The primary object of this invention has been to meet the foregoing need. That object and others have been achieved by the invention herein disclosed and claimed.

This invention finds utility in a package comprising a flexible enclosure that is adapted to light-tightly store and dispense a roll of photosentive web material for use in cooperating apparatus, and a roll including an elongate strip of such material wound about a hollow cylindrical core having open opposite ends.

The enclosure comprises the features defined in the Claims.

This invention, and its objects and advantages, will become more apparent in the detailed description of its illustrated embodiments presented hereinbelow.

### BRIEF DESCRIPTION OF THE DRAWINGS

In the detailed description of the embodiments of this invention presented below, reference is made to the accompanying drawings, wherein like reference characters denote like elements, and wherein:
Fig. 1 is an exploded partial perspective view illustrating a photosensitive web roll and fragments of a flexible enclosure adapted, in accordance with a first embodiment of this invention, to light-tightly enclose the web roll;
Fig. 2 is a perspective view depicting the flexible enclosure shown fragmentally in Fig. 1, with the web roll fully received therein;
Fig. 3 is an enlarged partial sectional view, taken along line 3-3 in Fig.2, revealing certain interfitting relationships between the web roll and the flexible enclosure when brought together as depicted in Fig. 2;
Fig. 4 is a perspective view illustrating the flexible enclosure of Fig. 2 when folded about the web roll therein and taped closed;
Fig. 5 is a perspective view depicting the flexible enclosure of Fig. 4 when mounted in a cooperating cartridge, with a neck portion of the enclosure unfolded and operatively positioned to dispense web material from the roll;
Fig. 6 is a perspective view of a rectangular plastic sleeve from which a flexible bag component of the enclosure is formed;
Fig. 7 is a perspective view of the flexible bag component formed from the sleeve shown in Fig. 6;
Fig. 8 is a perspective view illustrating the flexible bag component of Fig. 7 when fully unfolded to receive the web roll therein as depicted in Fig. 2;
Fig. 9 is an exploded partial perspective view illustrating two other components of the enclosure as configured according to a second (the preferred) embodiment of this invention;
Fig. 10 is an enlarged, exploded, partial sectional view, taken generally along line 10-10 in Fig. 9, revealing mating relationships of the two spaced-apart components there shown, with part of the flexible bag component disposed therebetween; and
Fig. 11 is a sectional view similar to Fig. 10 but depicting the interfitting relationships among all three components there shown when brought together in accordance with the second embodiment.

### DESCRIPTION OF THE ILLUSTRATED EMBODIMENTS

Because certain parts of photosensitive web roll enclosures are well known, the following description is directed in particular to those elements forming, cooperating directly with, or relating to, this invention. Elements not specifically shown or described herein are selectable from those known in the relevant art.

### The First Embodiment

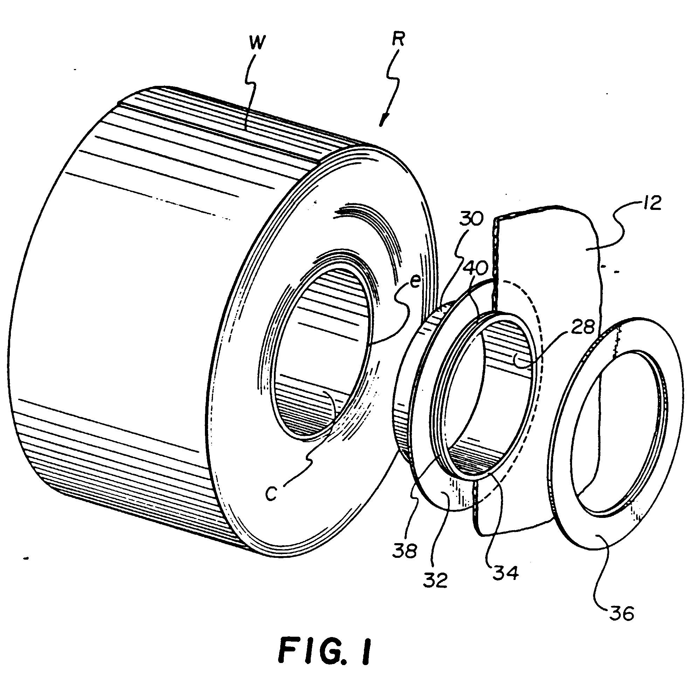

The first embodiment of this invention is depicted in Figs. 1-8. Fig. 1 illustrates a roll R of photosensitive web material W intended for use in a cooperating apparatus. The web material W may comprise, for example, a wound strip of color-print paper intended for exposure and processing in a minilab facility. Roll R comprises an elongate strip of such material wound about a hollow cylindrical core c having open opposite ends e (only one shown). Core c typically is formed from a paperboard material but may instead be made of extruded plastic.

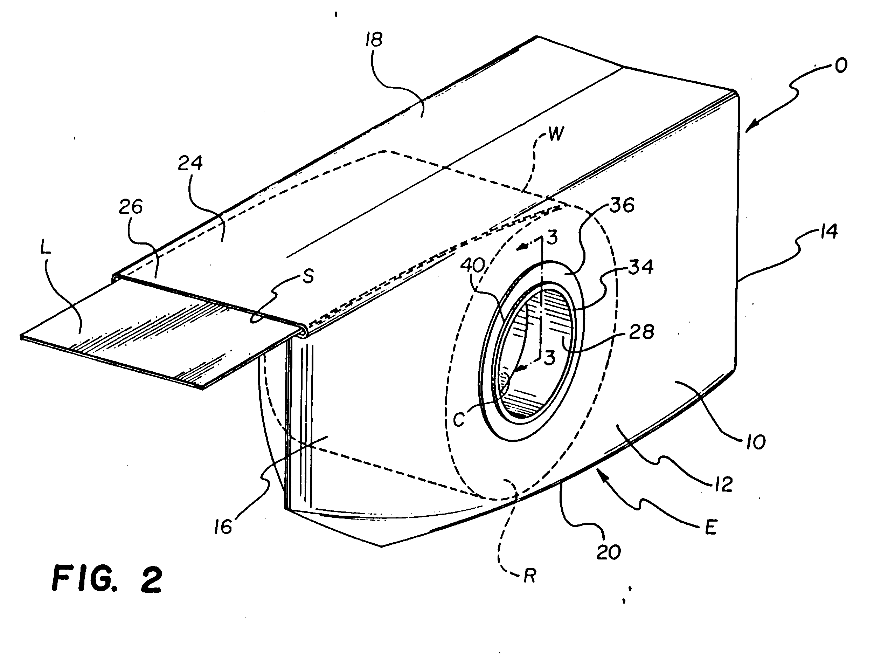

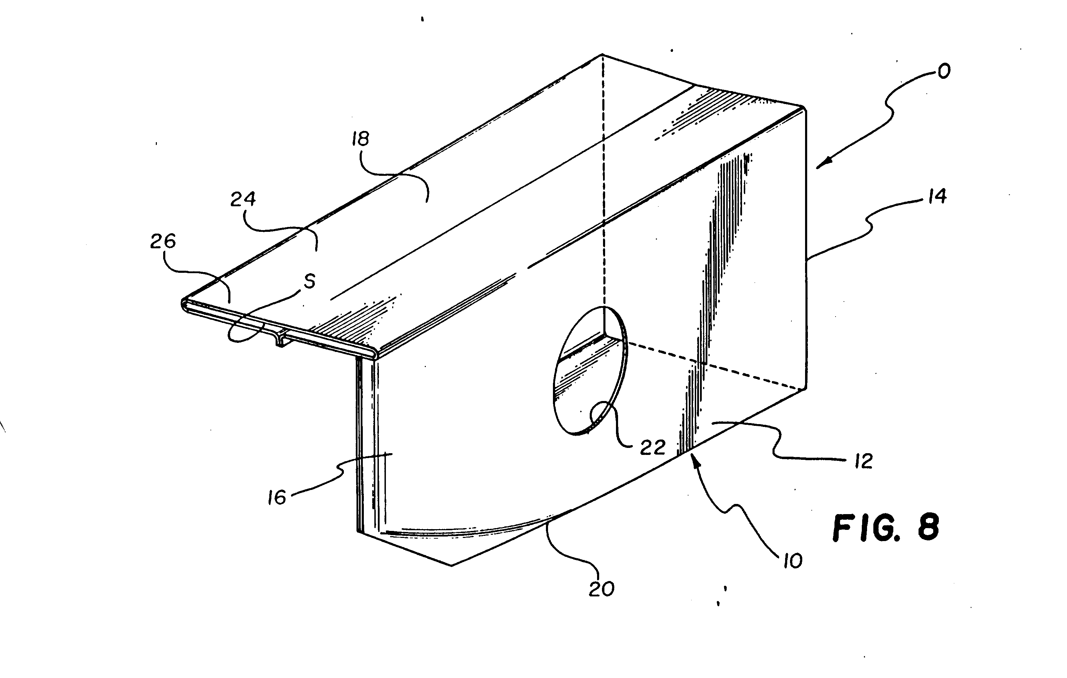

As depicted in Fig. 2, the flexible enclosure E of this invention is adapted to light-tightly store roll R therein and dispense its web material W for use in the aforementioned apparatus. Enclosure E comprises a flexible opaque bag 10, preferably made from a thin, flexible, opaque, plastic sheet material such as high-density polyethylene approximately 0,127mm (0.005 inches) thick. Configured to enclose the roll R, bag 10 includes a pair of opposite sidewalls 12 (one shown) extending between opposing rearward and forward portions 14 and 16, respectively, and between opposing upper and lower portions 18 and 20, respectively. Each of the bag sidewalls 12 has a centrally disposed aperture 22 therein (see Fig. 8) that is substantially congruent with one of the core ends e. The bag rearward portion 14 initially defines a closable opening O through which roll R can be inserted into the bag. Bag 10 further includes a shallow neck portion 24 that projects forwardly from bag forward portion 16 to a distal end 26 thereof defining an exit slot s, through which the strip of web material W can be withdrawn from the bag.

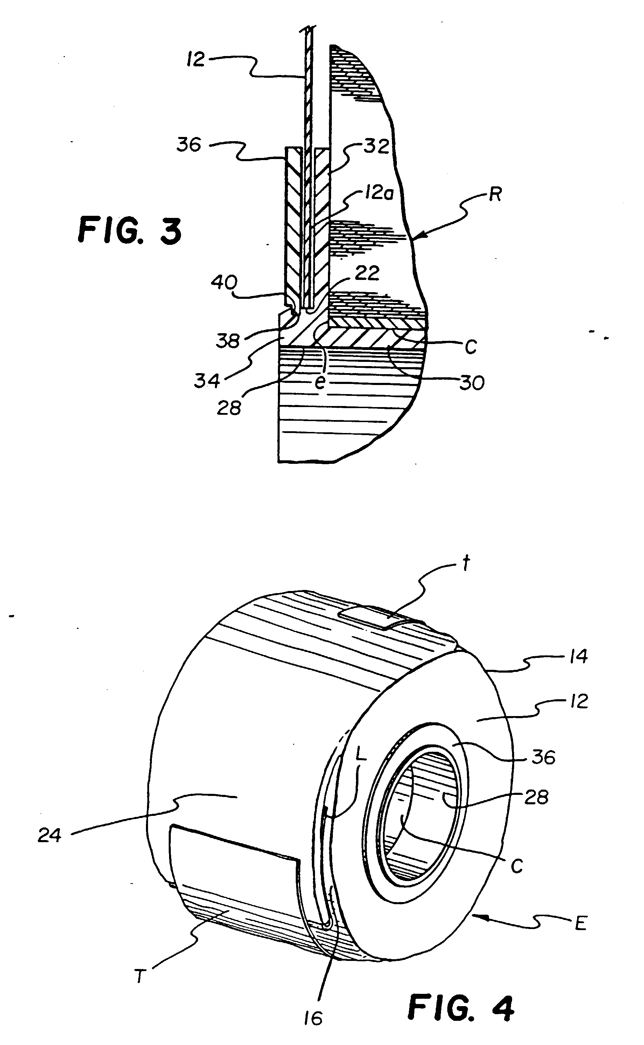

As shown most clearly in Figs. 1 and 3, enclosure E also comprises a pair of flanged collars 28, each including an axially inwardly extending cylindrical portion 30 adapted to fit tightly inside one of the axially outwardly directed core ends e, an annular flange portion 32 that extends radially outward from cylindrical portion 30, to axially inwardly face that core end, and a cylindrical extension 34 that extends axially outward from flange portion 32 and is adapted to project outwardly through the aperture 22 in one of the bag sidewalls 12.

As shown in Figs. 1-4, enclosure E further comprises a pair of annular rings 36, each being matably attachable to the cylindrical extension 34 on one of the collars 28 in axially closely spaced inward-facing relation to flange portion 32. Each cylindrical extension 34 is provided with means 38, such as a suitably disposed and dimensioned circumferential groove 40 therein, for matably receiving one of the rings in said inward-facing relation to flange portion 32.

In assembling the foregoing components of enclosure E, the cylindrical portion 30 of each collar 28 is first pressed tightly inside a respective one of the core ends e so that the flange portion 32 of each collar closely faces the adjacent core end.

The roll R, with both collars pressed into its core ends as just described, is then positioned inside bag 10, through the closable opening O in bag rearward portion 14, so that a leading end portion L of the web material strip W extends from the roll forwardly into bag neck portion 24 and thence out through exit slot s as shown, and so that the collar at each core end is axially aligned with the aperture 22 in a respective one of the bag sidewalls 12. When roll R is so positioned, the flange portion 32 of each collar lies in axially close outward-facing relation to an annular portion 12a of the respective sidewall 12 surrounding aperture 22, and the cylindrical extension 34 extending axially outward from flange portion 32 projects outwardly through aperture 22.

Each annular ring 36 is then snap-fitted into the circumferential groove 40 in a respective one of the outwardly projecting cylindrical extensions 34, so as to lie in axially close inward-facing relation to the sidewall annular portion 12a surrounding the aperture 22 through which that cylindrical extension 34 projects, whereby each sidewall annular portion 12a is light-lockingly trapped between an axially closely spaced outward-facing flange portion 32 (inside the bag) and an axially closely spaced inward-facing annular ring 36 (outside the bag), as shown most clearly in Fig. 3.

The still-open rearward portion 14 of the bag is then folded and light-tightly sealed closed. The sealing may be achieved conveniently by applying a suitable strip of adhesive tape t (see Fig. 4).

To light-tightly secure roll R inside enclosure E during storage, shipment, and handling, the bag neck portion 24, with the web material strip leading end portion L extending through exit slot s, is then folded back upon itself and secured in a storage position against forward portion 16 by another strip of adhesive tape T (again see Fig. 4).

When enclosure E is to be operatively disposed to dispense the web material strip W therefrom, tape T is removed and neck portion 24 is unfolded from its just-described storage position to a dispensing position wherein the neck portion extends forwardly from forward portion 16 in general alignment with one of the upper and lower portions 18 and 20, preferably upper portion 18 as depicted in Fig. 2, whereby bag 10 when operatively disposed has a generally L-shaped configuration (as viewed from the side).

Because of the above-described closely spaced relationship between each bag sidewall annular portion 12a and the adjacent flange portion 32 and annular ring 36 between which the annular portion is light-lockingly trapped (see Fig. 3), the roll core c, the collars 28 thereon, and the rings 36 on the collars are together freely rotatable relative to the bag. Thus, when enclosure E is operatively disposed to dispense the web material strip, bag 10 remains stationary as the strip is drawn freely from the web roll and out through the exit slot.

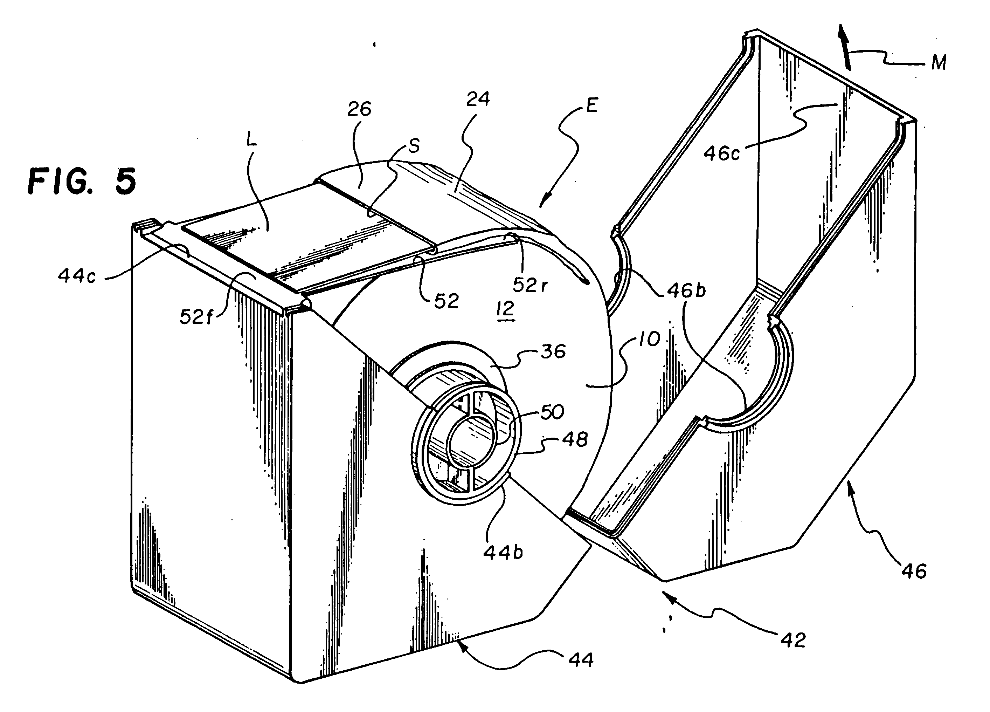

As illustrated in Fig. 5, the enclosure E with web roll R enclosed therein may conveniently be mounted in a cooperating cartridge 42 adapted for use in a minilab machine. Cartridge 42 comprises a lower housing section 44 and a mating upper housing section 46, which is hingedly connected to the lower housing section for pivotal movement (in the direction of arrow M) from an open position (shown in Fig. 5) to a closed position (not shown) fully enclosing the web roll. It will be noted that the opposing sidewalls of housing sections 44 and 46 are provided with semicircular grooved bearing surfaces 44b and 46b, respectively, which in the closed position form corresponding circular grooved bearings configured to seat a pair of mating hubs 48 (one shown) at the outer ends of tubular spindle means 50. The spindle means 50 is adapted to fit slidably inside the collar 28 at each end of roll core c, and thereby support the collars, the rings thereon, and the web roll for rotation relative thereto. It will also be appreciated that the top-front corner portions 44c and 46c of the two housing sections are configured to provide a cartridge exit port therebetween when in their closed position. A stiff sheet-like member 52 (made of paperboard or plastic) is shown with its rear end 52r inserted under the bag neck portion 24 and its front end 52f disposed on corner portion 44c, to provide support for the neck portion when in its dispensing position, and to support and guide the web material strip leading end portion L in its intended pathway between the neck portion exit slot s and the cartridge exit port. In practice, the leading end portion L is withdrawn beyond corner portion 44c to leave a readily graspable length thereof extending outside the cartridge before the two housing sections are closed. The cartridge can then be operatively disposed in cooperating apparatus, and its web material leading end portion L then connected thereto for intended exposure and processing.

When all of the web material has been withdrawn, the cartridge can be removed from the apparatus, and the exhausted flexible enclosure removed from the cartridge. An advantageous feature of this invention is that the web-roll core, the collars thereon, the rings on the collars, and the flexible bag can all be made from recyclably compatable plastic materials, so that the exhausted flexible enclosure can be readily recycled as a whole, without costly separation and separate handling of its component parts.

Another advantageous feature of this invention is that the light-tight flexible enclosure E with web roll R enclosed therein may, alternatively, be mounted directly in the cooperating apparatus, e.g., a minilab machine, without need of a cartridge. In that application, the flexible enclosure can be mounted in operative relation to structure in the apparatus, analogous to that described above, for locating and rotatably supporting the roll core, for supporting the bag neck portion, and for supporting and guiding the web material strip outside the neck portion.

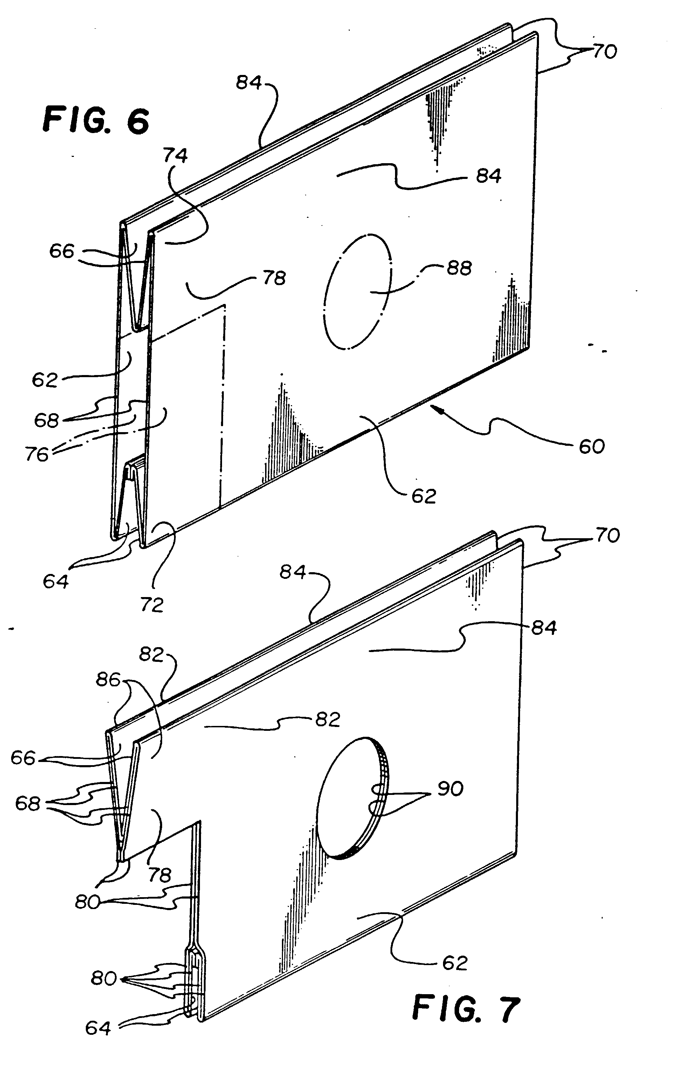

Figs. 6-8 illustrate steps involved in providing the flexible bag 10. Those steps include forming a substantially flat rectangular sleeve 60 (see Fig. 6) from a thin, flexible, opaque, plastic sheet material, such as the aforementioned high-density polyethylene approximately 0,127mm (0.005 inches) thick. Sleeve 60 has a pair of opposing rectangular side panels 62 joined together along bottom and top portions 64 and 66 thereof that extend longitudinally between unjoined front and rear edges 68 and 70. The bottom and top portions 64 and 66 and the front edges 68 together define, respectively, bottom-front and top-front corners 72 and 74 of the sleeve. The bottom and top portions 64 and 66 are folded inwardly toward each other between the side panels as shown.

The next step (see Figs. 6 and 7) entails removing a lower corner portion 76 of the sleeve (shown in Fig. 6 as delimited by dash-dotted lines) emanating from its bottom-front corner 72, leaving intact an upper corner portion 78 emanating from its top-front corner 74. Side panel edges 80 that result from removing lower corner portion 76 are then joined together (as shown in Fig. 7). Each side panel thus assumes a generally L-shaped configuration 82 that comprises a main portion 84, extending between the now-joined side-panel edges 80 and the still-unjoined rear edges 70, and a narrow portion 86 extending from main portion 84 to the unjoined front edges 68 of remaining upper corner portion 78.

Another step (Figs. 6 and 7) entails removing a circular portion 88 (shown in Fig. 6 as delimited by dash-dotted lines), substantially congruent with one of the roll core ends e, from a central area of each side-panel main portion 84, leaving a centrally disposed circular opening 90 (Fig. 7), so congruent, in each main portion.

The final step (see Figs. 7 and 8) involves spreading apart the opposing side panels 62, thereby unfolding the inwardly folded bottom and top portions 64 and 66 therebetween and thus providing the flexible opaque bag 10. The spread-apart side-panel main portions 84 form the bag sidewalls 12. The circular opening 90 in each main portion 84 provides the central aperture 22 in each sidewall. The spread-apart main-portion still-unjoined rear edges 70 provide the bag rearward portion 14 defining the closable opening O. The spread-apart main-portion now-joined edges 80 provide part of the bag forward portion 16. The now-unfolded side-panel bottom and top portions 64 and 66 between the spread-apart main portions 84 form the bag lower and upper portions 20 and 18 respectively. The spread-apart side-panel narrow portions 86 and now-unfolded top portions 66 therebetween together form the bag neck portion 24, and their unjoined front edges 68 together form the neck portion distal end 26 defining the exit slot s. The resulting bag 10, shown in Fig. 8, is then ready for insertion and positioning of web roll R therein as already described with reference to Fig. 2.

### The Second (Preferred) Embodiment

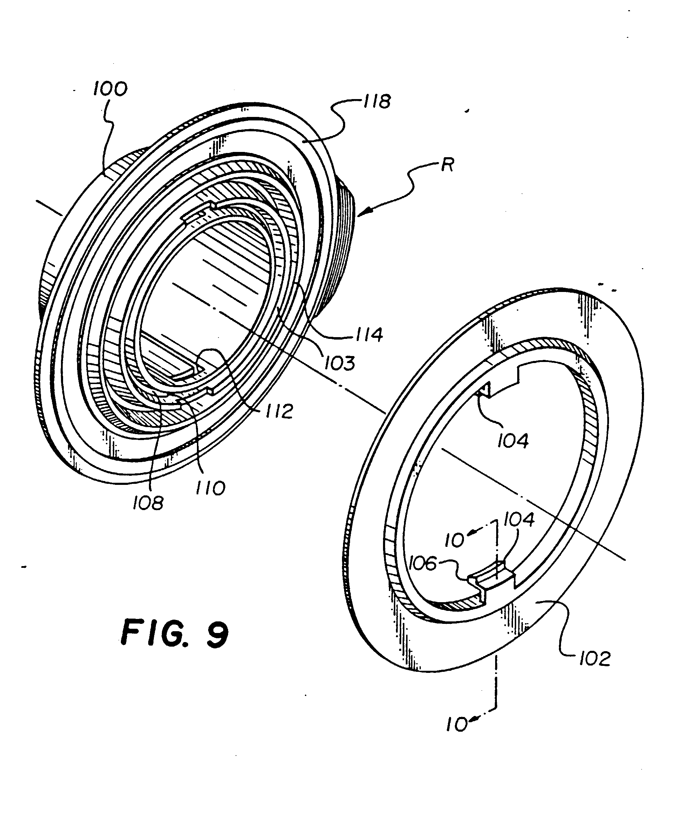

A second (preferred) embodiment of this invention is depicted in Figs. 9-11. This embodiment relates to a different way of fastening the ring to its mating collar at each end of the web roll core. In other respects, this embodiment is identical to the first embodiment described above.

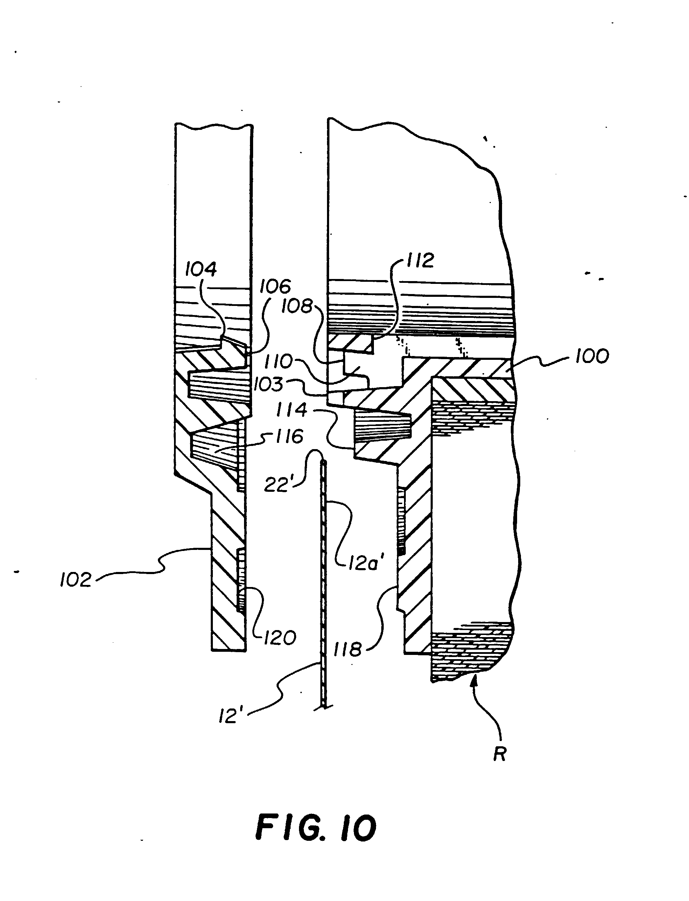

Fig. 9 shows, in perspective, a fragment of the web roll R, a flanged collar 100 aligned therewith, and an annular ring 102 aligned with the collar. Collar 100 has a substantially cylindrical extension 103 that extends axially outward from the collar flange portion and is adapted to project outwardly through the bag sidewall aperture. Ring 102 has two diametrically opposed, resiliently flexible latch fingers 104 that extend both radially inward and axially inward (toward collar 100) to engage mating structure on the collar extension 103. Fig. 10 shows, in section, fragments of collar 100 and ring 102 in spaced alignment with a portion of bag sidewall 12' disposed therebetween.

When the collar and ring are coaxially aligned as shown, a latch face 106 on each latch finger 104 is in position to enter a latch-receiving groove 108 in the collar extension 103. Entry of latch face 106 into groove 108 keeps the ring and collar coaxially aligned while the ring is rotated until face 106 enters a latch-receiving opening 110 in the collar extension. Entry of latch face 106 into opening 110 indicates that the ring and collar are angularly aligned for a further axially inward thrust of face 106, which follows until latch finger 104 snaps into engagement with a latch-receiving rib 112 on the collar extension. This way of fastening the ring to the collar is especially advantageous when assembling the flexible enclosure in the dark.

To preclude any light-leaking into the bag between the ring and the collar, a continuous tapered rib 114 is provided on the collar to enter a continuous mating groove 116 in the ring, and a continuous annular rib 118 is provided on the collar to enter a continuous corresponding groove 120 in the ring. In this embodiment, the bag sidewall aperture 22' is made somewhat larger then aperture 22 of the first embodiment, in order to accommodate the greater diameter of rib 114; and the rib 118 and groove 120 provide a labyrinthine path in which the sidewall annular portion 12a' surrounding aperture 22' is light-lockingly trapped as the collar and ring together rotate relative thereto.

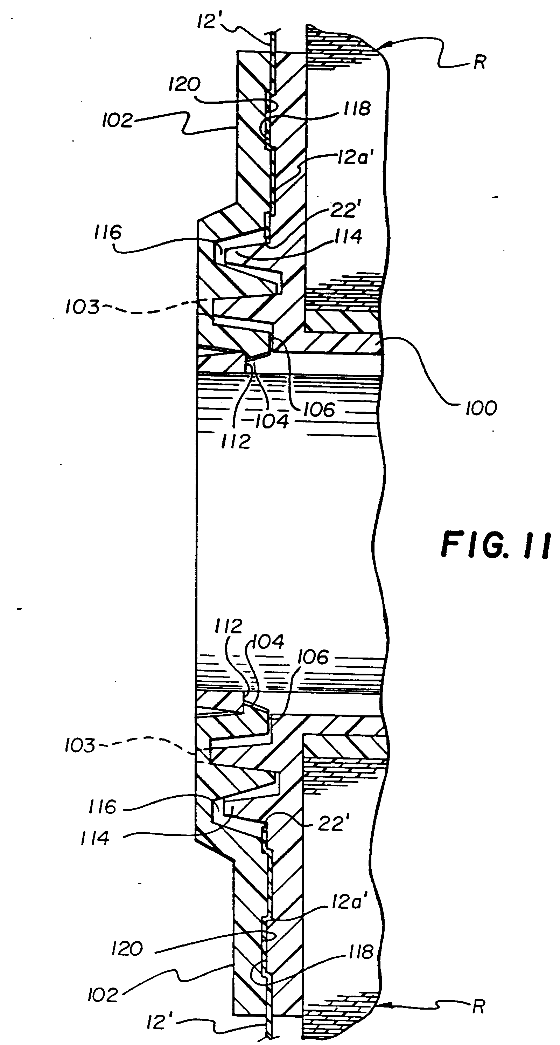

Fig. 11 illustrates the interfitting and cooperating relationships that result when the components shown in Fig. 10 are fully assembled in accordance with this embodiment.

The second embodiment need not be limited to use of only two latch fingers 104 and latch-receiving openings 110 and ribs 112, as more than two of each in appropriate mating relationship could as well be provided. Also, alternative locations and configurations of the continuous ribs 114 and 118 and mating grooves 116 and 120 could be adopted.

Thus, although the present invention has been described with particular reference to its two embodiments illustrated herein, it will be understood by those skilled in the art that further variations and modifications could still be effected within the scope of this invention as defined by the claims set forth below.

## Claims

1. A package of photosensitive web material (W) to be mounted in a cartridge (42), the package including a flexible enclosure adapted to light-tightly store the photosensitive web material and dispense the web material for use in a cooperating apparatus, and a roll (R) of the photosensitive web material within the enclosure, the roll including an elongate strip of such material wound about a hollow cylindrical core (c) having open opposite ends (e), wherein the enclosure comprises:
- a flexible opaque bag (10) configured to enclose the roll, said bag including opposite sidewalls (12) extending between opposing rearward and forward portions (14, 16) and between opposing upper and lower portions (18, 20), each of said sidewalls having a centrally disposed aperture (22) therein substantially congruent with one of said core ends, said rearward portion defining a closable opening (O) through which the roll can pass into said bag during assembly of the package, said bag further including a shallow neck portion (24) projecting forwardly from said forward portion to a distal end (26) thereof defining an exit slot (s) through which the strip of web material can pass;
- a pair of flanged collars (28; 100), each of said collars including an axially extending cylindrical portion (30) adapted to fit tightly inside one of said core ends, a cylindrical extension (34; 103) adapted to extend through one of said apertures, and an annular flange portion (32) extending radially outward from said cylindrical portion to axially face said one core end; and
- a pair of annular rings (36; 102), each of said rings being matingly attached to one of said collars in axially closely spaced inward-facing relation to said flange portion thereof;
- said cylindrical portion of each collar being pressed tightly inside a respective one of said core ends so that said flange portion of said collar closely faces said core end;
- the roll being positioned in said bag, through said closable opening in said rearward portion thereof, so that a leading end portion (L) of the web material strip extends from the roll forwardly into said neck portion and out through said exit slot, and so that said collar on each core end is axially aligned with said aperture in a respective one of said sidewalls, whereby said flange portion of said collar lies in axially close outward-facing relation to an annular portion of said sidewall surrounding said aperture;
- each annular ring being matingly attached (40; 104 - 112) to a respective one of said cylindrical extensions in axially closely spaced relation to said flange portion thereof so that said ring lies outside said bag in axially close inward-facing relation to said sidewall annular portion, whereby said sidewall annular portion is light-tightly trapped between said flange portion and said ring and said core, said collars thereon, and said rings on said collars are freely rotatable relative to said bag for allowing rotation of the roll (R) in the cartridge (42);
- said closable opening in said rearward portion of said bag being light-tightly closed; and
- said neck portion of said bag, with said leading end portion of the web material strip extending through said exit slot, being folded back upon itself and secured in a storage position against said forward portion of said bag.

2. A package as claimed in Claim 1, wherein one of said collar and said ring at each core end includes an annular projection (38) extending toward the other of said collar and said ring, and wherein said other of said collar and said ring includes an annular recess (40) facing said annular projection and matable therewith to prevent passage of light between said collar and said ring when said ring is in said axially closely spaced inward-facing relation to said flange portion.

3. A package as claimed in Claim 1, wherein when said enclosure is operatively disposed to dispense the web material strip, said neck portion is unfolded from said storage position thereof to a dispensing position in which said neck portion extends forwardly from said forward portion in general alignment with one of said upper and lower portions, whereby said bag when operatively disposed has a generally L-shaped configuration.

4. A package as claimed in Claim 3, characterized in that when said enclosure is operatively disposed to dispense the web material strip, said bag remains stationary as the strip is drawn from the roll and out through said exit slot; and wherein said collars are adapted to be supported by mating spindle means in the cartridge for rotation relative thereto as the web material strip is drawn from the roll; and wherein said neck portion of said bag is adapted to be supported in said dispensing position thereof when said enclosure is operatively disposed to dispense the web material strip.

5. A method of packaging photosensitive material in a package to be received in a cartridge (42), the package light-tightly storing and dispensing such material for use in co-operating apparatus, the material being provided as a roll (R) including an elongate strip of the web material wound about a hollow cylindrical core (c) having open opposite ends (e), the method comprising the steps of:
- providing a flexible opaque bag (10) configured to enclose the roll, the bag including opposite sidewalls (12) extending between opposing rearward and forward portions (14, 16) and between opposing upper and lower portions (18, 20), each of the sidewalls having a central aperture (22) therein substantially congruent with one of the core ends, the rearward portion defining a closable opening (O) through which the roll can pass during assembly of the package, and a shallow neck portion (24) projecting forwardly from the forward portion to a distal end thereof defining an exit slot (s) through which the strip of web material can pass;
- providing a pair of flanged collars (28; 100), each including an axially extending cylindrical portion (30) adapted to fit tightly inside one of the core ends, a cylindrical extension (34; 103) adapted to extend through one of said apertures, and an annular flange portion (32) extending radially outward from the cylindrical portion to axially inwardly face the core end;
- providing a pair of annular rings (36; 102), each being matably attachable to one of the collars in axially closely spaced inward-facing relation to the flange portion thereof;
- pressing the cylindrical portion of each collar tightly inside a respective one of the core ends so that the flange portion of the collar closely faces the core end;
- inserting the roll into the bag, through the closable opening in its rearward portion, and arranging the roll therein so that a leading end portion (L) of the web material strip extends forwardly into the neck portion and out through the exit slot, and so that the collar on each core end is axially aligned with the aperture in a respective one of the sidewalls and the cylindrical extensions extend through the apertures, whereupon the flange portion of each collar lies in axially close outward-facing relation to an annular portion of the respective sidewall surrounding the aperture;
- matably attaching each annular ring to a respective one of the cylindrical extension in axially closely spaced relation to the flange portion thereof so that each ring lies outside the bag in axially close inward-facing relation to the respective sidewall annular portion whereupon each sidewall annular portion is light-tightgly trapped between the flange portion and ring laying in axially close facing relation thereto and said core, said collars thereon, and said rings on said collars are freely rotatable relative to said bag for allowing rotation of the roll (R) in the cartridge (42);
- light-tightly closing the opening in the rearward portion of the bag; and
- folding the neck portion of the bag, with the web material strip leading end portion extending therethrough, back upon itself, and securing the folded neck portion in a storage position against the forward portion of the bag.

6. The method claimed in Claim 5 further comprising the step of:
- unfolding and moving the neck portion from its storage position to a dispensing position, wherein the neck portion projects forwardly from the forward portion in general alignment with one of said upper and lower portions of the bag, to dispense the web material strip therefrom.

7. The method claimed in Claim 5 wherein:
- said step of providing the flanged collars includes the step of providing each collar with means thereon for matably receiving one of the annular rings in said axially closely spaced inward-facing relation to the flange portion;
- said step of attaching each annular ring includes the step of matably securing each ring to said receiving means on the substantially cylindrical extension projecting through said aperture, so that each ring lies in said axially close inward-facing relation to the sidewall annular portion surrounding said aperture, and so that each ring and opposing flange portion are together freely rotatable relative to said sidewall annular portion light-lockingly trapped therebetween.

8. The method claimed in Claim 5 wherein
- said steps of providing the flanged collars and providing the annular rings include the step of forming the flanged collar and the annular ring at each core end so that one of said collar and said ring at each core end has an annular projection thereon extending toward the other of said collar and said ring, and wherein said other of said collar and said ring has an annular recess therein facing said annular projection and matable therewith to prevent light from passing between said collar and said ring when said ring is in said axially closely spaced inward-facing relation to said flange portion of said collar.

9. The method claimed in Claim 5 wherein said step of providing the flexible opaque bag includes the steps of :
- forming a substantially flat rectangular sleeve (60) from thin, flexible, opaque, plastic sheet material, the sleeve including a pair of opposing rectangular side panels (62) joined together along bottom and top portions thereof extending longitudinally between unjoined front and rear edges, the bottom and top portions and the front edges together defining, respectively, bottom-front and top-front corners (72,74) of the sleeve;
- folding the bottom and top portions (64,66) inwardly toward each other between the side panels;
- removing a lower corner portion (76) of the sleeve emanating from the bottom-front corner (72) thereof, leaving intact an upper corner portion emanating from the top-front corner (74), and joining together side panel edges resulting from removing the lower corner portion, thereby imparting to each side panel a generally L-shaped configuration including a main portion, extending between the now-joined side-panel edges and the still-unjoined rear edges, and a narrow portion extending from the main portion to the unjoined front edges of the remaining upper corner portion;
- removing a circular portion (88), substantially congruent with one of the core ends, from a central area of each side-panel main portion, leaving a centrally disposed circular opening, so congruent, in each main portion; and
- spreading apart the opposing side panels (62), thereby unfolding the inwardly folded bottom and top portions therebetween and thus providing the flexible opaque bag (10), the spread-apart side-panel main portions forming the bag sidewalls, the circular opening in each main portion providing the central aperture in each sidewall, the spread-apart main-portion still unjoined rear edges providing the bag rearward portion defining the closable opening (0), the spread-apart main-portion now-joined edges providing part of the bag forward portion, the now-unfolded side-panel bottom and top portions between the spread-apart main portions forming the bag lower and upper portions respectively, the spread-apart side-panel narrow portions and now-unfolded top portions therebetween together forming the bag neck portion (24), and their unjoined front edges together forming the neck portion distal end defining the exit slot (5).

## Patentansprüche

1. Einheit für in eine Kassette (42) eingebrachtes lichtempfindliches Bandmaterial (W), wobei die Einheit aus einer biegsamen Hülle zum lichtdichten Speichern und Abgeben des lichtempfindlichen Bandmaterials zwecks Verwendung in einer kooperierenden Vorrichtung und aus einer in der Hülle angeordneten Rolle (R) des lichtempfindlichen Bandmaterials besteht, die einen langgestreckten, um einen hohlzylindrischen Kern (c) mit gegenüberliegenden offenen Endabschnitten (e) gewickelten Streifen des Bandmaterials aufweist, dadurch gekennzeichnet, daß die Hülle folgende Komponenten umfaßt:
- eine biegsame, lichtundurchlässige und die Rolle umschließende Tasche (10), die gegenüberliegende Seitenwände (12) aufweist, welche sich zwischen gegenüberliegenden hinteren und vorderen Wandungsteilen (14, 16) und zwischen gegenüberliegenden oberen und unteren Wandungsteilen (18, 20) erstrecken, wobei jede der Seitenwände eine mittig angeordnete, mit einem der Kernendabschnitte im wesentlichen kongruente Öffnung (22) aufweist und der hintere Wandungsteil eine verschließbare Öffnung (0) bildet, durch welche die Rolle beim Zusammenbau der Einheit in die Tasche einschiebbar ist, und wobei die Tasche ferner einen flachen Ansatz (24) aufweist, der vom vorderen Wandungsteil nach vorn bis zu einem distalen Ende (26) vorspringt, das einen Ausgangsschlitz (s) bildet, durch den der Bandmaterialstreifen passieren kann;
- zwei mit Flanschen versehene Hülsen (28; 100), die je ein axial verlaufendes zylindrisches Teil (30), das genau in eines der Kernendabschnitte paßt, eine zylinderförmige Verlängerung (34; 103), die sich durch eine der Öffnungen erstreckt, und ein ringförmiges Flanschteil (32) aufweisen, das von dem zylindrischen Teil radial nach außen verläuft und dem einen Kernendabschnitt axial gegenüberliegt; und
- zwei Ringe (36; 102), die mit je einer der Hülsen in Eingriff stehen und von dem Flanschteil einen sehr geringen axialen Abstand nach innen aufweisen;
- wobei das zylindrische Teil jeder Hülse jeweils fest in einen der Kernendabschnitte eingedrückt wird, so daß das Flanschteil der Hülse eng am Kernendabschnitt anliegt;
- wobei die Rolle durch die verschließbare Öffnung am rückwärtigen Teil der Tasche in diese eingebracht wird, so daß sich ein Führungsende (L) des Bandmaterialstreifens von der Rolle nach vorn in den Ansatz und durch den Ausgangsschlitz nach außen erstreckt und die Hülse in jedem Kernendabschnitt mit der jeweiligen Öffnung in den Seitenwänden axial ausgerichtet ist, wobei das Flanschteil der Hülse an dem ringförmigen Teil der die Öffnung umgebenden Seitenwand in axialer Richtung nach außen eng anliegt;
- wobei jeder Ring jeweils mit einer der zylinderförmigen Verlängerungen in Eingriff steht (40; 104 - 112) und von dem Flanschteil einen sehr geringen axialen Abstand aufweist, so daß der Ring außerhalb der Tasche liegt und an dem ringförmigen Teil der Seitenwand in axialer Richtung nach innen eng anliegt, wodurch der ringförmige Teil der Seitenwand zwischen dem Flanschteil, dem Ring und dem Kern lichtdicht angeordnet ist und die Hülsen sowie die auf den Hülsen sitzenden Ringe relativ zur Tasche frei drehbar sind, so daß sich die Rolle (R) in der Kassette (42) drehen kann;
- wobei die verschließbare Öffnung im rückwärtigen Teil der Hülle lichtdicht verschlossen ist; und
- wobei der Ansatz der Tasche, in dem sich das Führungsende des Bandmaterialstreifens durch den Ausgangsschlitz erstreckt, nach hinten umgeklappt und in einer Lagerungsstellung am Vorderteil der Tasche befestigt wird.

2. Einheit nach Anspruch 1, dadurch gekennzeichnet, daß eine der an jedem Kernendabschnitt befindlichen Hülse/ Ring-Verbindung einen ringförmigen Vorsprung (38) aufweist, der sich in Richtung auf die andere Hülse/Ring-Verbindung erstreckt, und daß die andere Hülse/Ring-Verbindung eine dem Vorsprung gegenüberliegende Nut (40) aufweist, die mit dem Vorsprung in Eingriff bringbar ist, um ein Eindringen von Licht zwischen der Hülse/ Ring-Verbindung zu verhindern, wenn der Ring einen sehr geringen axialen Abstand zu dem Flanschteil aufweist.

3. Einheit nach Anspruch 1, dadurch gekennzeichnet, daß zur Verbringung der Hülle in Wirkstellung für die Abgabe von Bandmaterial, der Ansatz aus der Lagerungsstellung in eine Bandmaterial-Abgabestellung ausgeklappt wird, in welcher sich der Ansatz in allgemeiner Ausrichtung mit dem Ober- oder Unterteil vom Vorderteil nach vorn erstreckt, wobei die Tasche in ihrer Wirkstellung eine im wesentlichen L-förmige Konfiguration aufweist.

4. Einheit nach Anspruch 3, dadurch gekennzeichnet, daß die Hülle in ihrer Wirkstellung für die Abgabe von Bandmaterial in stationärem Zustand verbleibt, während der Materialstreifen von der Rolle abgezogen und durch den Ausgangsschlitz geführt wird; daß die Hülsen durch eine passende kassettenseitige Spindel für deren Drehung relativ zur Kassette beim Abzug des Bandmaterialstreifens von der Rolle gehaltert sind; und daß der Ansatz der Tasche in seiner Bandmaterial-Abgabestellung gehaltert ist, nachdem die Hülle in ihre Wirkstellung für die Abgabe von Bandmaterial verbracht worden ist.

5. Verfahren zum Verpacken von lichtempfindlichem, in eine Kassette (42) eingebrachtem Bandmaterial als eine Einheit, die das lichtempfindliche Material zur Verwendung in einer kooperierenden Vorrichtung lichtdicht speichert und abgibt, wobei das Material in Form einer Rolle (R) vorliegt mit einem langgestreckten Streifen des Bandmaterials, das um einen hohlzylindrischen Kern (c) mit gegenüberliegenden offenen Endabschnitten (e) gewickelt ist, gekennzeichnet aurch folgende Schritte:
- Bereitstellen einer biegsamen, lichtundurchlässigen und die Rolle umschließenden Tasche (10), die gegenüberliegende Seitenwände (12) aufweist, welche sich zwischen gegenüberliegenden hinteren und vorderen Wandungsteilen (14, 16) und zwischen gegenüberliegenden oberen und unteren Wandungsteilen (18, 20) erstrecken, wobei jede der Seitenwände eine mittig angeordnete, mit einem der Kernendabschnitte im wesentlichen kongruente Öffnung (22) aufweist und der hintere Wandungsteil eine verschließbare Öffnung (0) bildet, durch welche die Rolle beim Zusammenbau der Einheit in die Tasche einschiebbar ist, sowie einen flachen Ansatz (24), der vom vorderen Wandungsteil nach vorn bis zu einem distalen Ende (26) vorspringt, das einen Ausgangsschlitz (s) bildet, durch den der Bandmaterialstreifen passieren kann;
- Bereitstellen von zwei mit Flanschen versehenen Hülsen (28; 100), die je ein axial verlaufendes zylindrisches Teil (30), das genau in eines der Kernendabschnitte paßt, eine zylinderförmige Verlängerung (34; 103), die sich durch eine der Öffnungen erstreckt, und ein ringförmiges Flanschteil (32) aufweisen, das von dem zylindrischen Teil radial nach außen verläuft und dem einen Kernendabschnitt axial gegenüberliegt;
- Bereitstellen von zwei Ringen (36; 102), die mit je einer der Hülsen in Eingriff stehen und von dem Flanschteil einen sehr geringen axialen Abstand nach innen aufweisen;
- Eindrücken des jeweiligen zylindrischen Teils jeder Hülse in einen der Kernendabschnitte, so daß das Flanschteil der Hülse eng am Kernendabschnitt anliegt;
- Einbringen der Rolle in die Tasche durch die verschließbare Öffnung an ihrem rückwärtigen Teil und Positionieren der Rolle, so daß sich ein Führungsende (L) des Bandmaterialstreifens von der Rolle nach vorn in den Ansatz und durch den Ausgangsschlitz nach außen erstreckt und die Hülse in jedem Kernendabschnitt mit der jeweiligen öffnung in den Seitenwänden axial ausgerichtet ist, worauf das Flanschteil der Hülse an dem ringförmigen Teil der die Öffnung umgebenden Seitenwand in axialer Richtung nach außen eng anliegt;
- Ineingriffbringen jedes Rings mit einer der zylinderförmigen Verlängerungen in einem sehr geringen axialen Abstand zum Flanschteil, so daß jeder Ring außerhalb der Tasche liegt und an dem jeweiligen ringförmigen Teil der Seitenwand in axialer Richtung nach innen eng anliegt, worauf jeder ringförmige Teil der Seitenwände zwischen dem Flanschteil und dem Ring, der an diesem in axialer Richtung eng anliegt, und dem Kern lichtdicht angeordnet ist und die Hülsen sowie die auf den Hülsen sitzenden Ringe relativ zur Tasche frei drehbar sind, so daß sich die Rolle (R) in der Kassette (42) drehen kann;
- lichtdichtes Verschließen der Öffnung im rückwärtigen Teil der Tasche; und
- Umklappen des Ansatzes der Tasche, in dem sich das Führungsende des Bandmaterialstreifens durch den Ausgangsschlitz erstreckt, nach hinten und Befestigen des umgeklappten Ansatzes in einer Lagerungsstellung am Vorderteil der Tasche.

6. Verfahren nach Anspruch 5, gekennzeichnet durch folgenden zusätzlichen Schritt:
- Ausklappen und Bewegen des Ansatzes aus seiner Lagerungsstellung in eine Bandmaterial-Abgabestellung, in welcher sich der Ansatz in allgemeiner Ausrichtung mit dem Ober- oder Unterteil der Tasche vom Vorderteil nach vorn erstreckt, um den Bandmaterialstreifen daraus abzugeben.

7. Verfahren nach Anspruch 5, dadurch gekennzeichnet, daß
- der Schritt zum Bereitstellen der geflanschten Hülsen den Schritt umfaßt, in dem jede Hülse mit Mitteln zum formschlüssigen Aufnehmen eines der Ringe mit geringem, axialem Abstand nach innen versehen wird;
- der Schritt zum Anbringen jedes Rings den Schritt umfaßt, in dem jeder Ring an dem Aufnahmemittel, das sich auf der im wesentlichen zylindrischen, durch die öffnung vorspringenden Verlängerung befindet, formschlüssig gesichert wird, so daß jeder Ring an dem die öffnung umgebenden ringförmigen Teil der Seitenwand in axialer Richtung nach innen eng anliegt, und daß jeder Ring und das gegenüberliegende Flanschteil relativ zu dem lichtdicht dazwischenliegenden ringförmigen Teil der Seitenwand zusammen frei drehbar sind.

8. Verfahren nach Anspruch 5, dadurch gekennzeichnet, daß die schritte zum Bereitstellen der geflanschten Hülsen und Bereitstellen der Ringe den Schritt umfassen, in dem die geflanschte Hülse und der Ring an jedem Kernendabschnitt so geformt werden, daß entweder die Hülse oder der Ring an jedem Kernendabschnitt einen ringförmigen Vorsprung aufweist, der sich in Richtung der anderen Komponente ohne Vorsprung erstreckt, und daß die andere Komponente ohne Vorsprung eine ringförmige Nut aufweist, die dem ringförmigen Vorsprung gegenüberliegt und mit diesem in Eingriff bringbar ist, um zu verhindern, daß Licht zwischen Hülse und Ring eindringt, wenn der Ring vom Flanschteil der Hülse einen sehr geringen axialen Abstand nach innen aufweist.

9. Verfahren nach Anspruch 5, dadurch gekennzeichnet, daß der Schritt zum Bereitstellen der biegsamen, lichtundurchlässigen Tasche folgende Schritte umfaßt:
- Bilden einer im wesentlichen flachen, rechtwinkligen Umkleidung (60) aus dünnem, elastischem, lichtundurchlässigem Kunststoffolienmaterial, wobei die Umkleidung zwei gegenüberliegende, rechtwinklige Seitenteile (62) aufweist, die entlang unteren (64) und oberen (66), sich längs zwischen nicht verbundenen Vorder- und Hinterkanten erstreckenden Elementen miteinander verbunden sind, wobei die unteren und oberen Elemente und die Vorderkanten zusammen die untere, vordere Ecke (72) bzw. die obere, vordere Ecke (74) der Umkleidung bilden;
- Falzen der unteren und oberen Elemente (64, 66) gegeneinander nach innen zwischen den Seitenteilen;
- Entfernen der unteren, von der unteren, vorderen Ecke (72) ausgehenden Eckenteile (76) der Umkleidung, wobei ein oberes, von der oberen, vorderen Ecke (74) ausgehendes Eckenteil (78) intakt bleibt, und Verbinden der durch das Entfernen der unteren Eckenteile entstandenen Kanten der Seitenteile, wodurch jedes Seitenteil eine im wesentlichen L-förmige Gestalt mit einem Hauptteil, das sich zwischen den soeben verbundenen Kanten der Seitenteile und den noch nicht verbundenen Hinterkanten erstreckt, und einem schmalen Teil, das sich vom Hauptteil zu den nicht verbundenen Vorderkanten des verbleibenden oberen Eckenteils erstreckt, erhält;
- Entfernen eines kreisförmigen Teils (88), das mit einem der Kernendabschnitte im wesentlichen kongruent ist, aus dem mittleren Bereich jedes Hauptteils der Seitenteile, wodurch mittig angeordnete kreisförmige öffnungen verbleiben, die in jedem Hauptteil der Seitenteile kongruent sind; und
- Auseinanderziehen der gegenüberliegenden Seitenteile (62), wodurch die dazwischenliegenden, nach innen gefalteten unteren und oberen Elemente (66) aufgefaltet werden und so die biegsame, lichtundurchlässige Tasche (10) entsteht, wobei die auseinandergezogenen Hauptteile der Seitenteile die Seitenwände der Tasche bilden, die kreisförmige Öffnung in jedem Hauptteil die mittig angeordnete öffnung in jeder Seitenwand darstellt, die noch unverbundenen Hinterkanten des auseinandergezogenen Hauptteils das die verschließbare Öffnung (0) definierende rückwärtige Teil der Tasche bilden, die soeben verbundenen Kanten des auseinandergezogenen Hauptteils einen Teil des Vorderteils der Tasche bilden, die soeben aufgefalteten, zwischen den auseinandergezogenen Hauptteilen liegenden unteren und oberen Elemente der Seitenteile die unteren bzw. oberen Teile der Tasche bilden, die auseinandergezogenen schmalen Teile der Seitenteile und die dazwischenliegenden, soeben aufgefalteten oberen Teile zusammen den Ansatz (24) der Tasche bilden, und die unverbundenen Vorderkanten das den Ausgangsschlitz (S) definierende distale Ende des Ansatzes bildet.

## Revendications

1. Emballage de matériau photosensible en bande (W) devant être monté dans une cartouche (42), l'emballage comprenant une enveloppe souple conçue pour emmagasiner le matériau photosensible en bande de façon étanche à la lumière, et distribuer le matériau en bande pour l'utiliser dans un appareil associé, et un rouleau (R) du matériau photosensible en bande à l'intérieur de l'enveloppe, le rouleau comprenant une bande allongée de ce matériau enroulée autour d'un noyau cylindrique creux (c) comportant des extrémités opposées ouvertes (e), dans lequel l'enveloppe comprend :
- un sachet opaque souple (10) configuré pour enfermer le rouleau, ledit sachet comprenant des parois latérales opposées (12) s'étendant entre des parties antérieure et postérieure opposées (14, 16) et entre des parties supérieure et inférieure opposées (18, 20), chacune desdites parois latérales comportant une ouverture (22), disposée de façon centrale dans celle-ci, correspondant sensiblement à l'une desdites extrémités du noyau, ladite partie postérieure définissant une ouverture (0) refermable au travers de laquelle le rouleau peut être introduit dans ledit sachet pendant l'assemblage de l'emballage, ledit sachet comprenant en outre une partie de col plat (24), faisant saillie vers l'avant à partir de ladite partie antérieure jusqu'à une extrémité distale (26) de celle-ci, définissant une fente de sortie (s) au travers de laquelle peut passer la bande de matériau,
- une paire de douilles à bride (28 ; 100), chacune desdites douilles comprenant une partie cylindrique s'étendant axialement (30) conçue pour s'ajuster étroitement à l'intérieur de l'une desdites extrémités du noyau, un prolongement cylindrique (34 ; 103) conçu pour s'étendre au travers de l'une desdites ouvertures, et une partie de bride annulaire (32) s'étendant radialement vers l'extérieur à partir de ladite partie cylindrique pour faire face axialement à ladite une extrémité du noyau, et
- une paire de bagues annulaires (36 ; 102), chacune desdites bagues étant accouplée à l'une desdites douilles en relation étroitement espacée dans le sens axial avec ladite partie de bride de celle-ci et faisant face vers l'intérieur,
- ladite partie cylindrique de chaque douille étant étroitement emboîtée dans une extrémité respective desdites extrémités du noyau, de sorte que ladite partie de bride de ladite douille fait étroitement face à ladite extrémité du noyau et lui fait face,
- le rouleau étant positionné dans ledit sachet, au travers de ladite ouverture refermable dans ladite partie postérieure de celui-ci, de sorte qu'une partie d'extrémité avant (L) de la bande de matériau s'étend vers l'avant à partir du rouleau jusque dans ladite partie de col et à l'extérieur au travers de ladite fente de sortie, et de sorte que ladite douille sur chaque extrémité du noyau est alignée axialement avec ladite ouverture dans une paroi latérale respective desdites parois latérales, d'où il s'ensuit que ladite partie de bride de ladite douille s'étend en relation de proximité axiale et faisant face vers l'extérieur avec une partie annulaire de ladite paroi latérale entourant ladite ouverture,
- chaque bague annulaire étant accouplée (40 ; 104-112) à un prolongement respectif desdits prolongements cylindriques en relation étroitement espacée dans le sens axial avec ladite partie de bride de celui-ci, de sorte que ladite bague s'étend à l'extérieur dudit sachet en relation de proximité axiale et tournée vers l'intérieur avec ladite partie annulaire de paroi latérale, d'où il s'ensuit que ladite partie annulaire de paroi latérale est retenue de façon étanche à la lumière entre ladite partie de bride et ladite bague, et que ledit noyau, lesdites douilles sur celui-ci, et lesdites bagues sur lesdites douilles peuvent tourner librement par rapport audit sachet, afin de permettre la rotation du rouleau (R) dans la cartouche (42),
- ladite ouverture refermable dans ladite partie postérieure dudit sachet étant fermée de façon étanche à la lumière, et
- ladite partie de col dudit sachet, avec ladite partie d'extrémité avant de la bande de matériau s'étendant au travers de ladite fente de sortie, étant repliée sur elle-même et fixée en position de rangement contre ladite partie antérieure dudit sachet.

2. Emballage selon la revendication 1, dans lequel l'une de ladite douille et de ladite bague à chaque extrémité du noyau comprend une saillie annulaire (38) s'étendant en direction de l'autre de ladite douille et de ladite bague, et dans lequel ladite autre de ladite douille et de ladite bague comprend un évidement annulaire (40) faisant face à ladite saillie annulaire et pouvant s'accoupler avec celle-ci afin d'empêcher le passage de la lumière entre ladite douille et ladite bague lorsque ladite bague se trouve dans ladite relation étroitement espacée dans le sens axial et faisant face vers l'intérieur avec ladite partie de bride.

3. Emballage selon la revendication 1, dans lequel quand ladite enveloppe est disposée de façon fonctionnelle afin de distribuer la bande de matériau, ladite partie de col est dépliée depuis ladite position de rangement de celle-ci jusqu'à une position de distribution dans laquelle ladite partie de col s'étend vers l'avant à partir de ladite partie antérieure en alignement général avec l'une desdites parties supérieure et inférieure, d'où il s'ensuit que ledit sachet, lorsqu'il est disposé fonctionnellement, présente une configuration générale en forme de L.

4. Emballage selon la revendication 3, caractérisé en ce que, quand ladite enveloppe est disposée de façon fonctionnelle afin de distribuer la bande de matériau, ledit sachet reste fixe tandis que la bande est tirée hors du rouleau et au dehors au travers de ladite fente de sortie, et dans lequel lesdites douilles sont conçues pour être supportées par une broche correspondante montée dans la cartouche, afin de tourner par rapport à celle-ci à mesure que la bande de matériau est extraite du rouleau, et dans lequel ladite partie de col dudit sachet est conçue pour être supportée dans ladite position de distribution de celle-ci lorsque ladite enveloppe est disposée de façon fonctionnelle afin de distribuer la bande de matériau.

5. Procédé d'emballage d'un matériau photosensible dans un emballage devant être logé dans une cartouche (42), l'emballage emmagasinant ce matériau de façon étanche à la lumière et distribuant ce matériau pour l'emploi dans un appareil associé, le matériau se présentant sous la forme d'un rouleau (R) comprenant une bande allongée du matériau en bande, enroulée autour d'un noyau cylindrique creux (c) comportant des extrémités opposées ouvertes (e), le procédé comprenant les étapes consistant à :
- procurer un sachet opaque souple (10) configuré pour renfermer le rouleau, le sachet comprenant des parois latérales opposées (12) s'étendant entre des parties antérieure et postérieure opposées (14, 16) et entre des parties supérieure et inférieure opposées (18, 20), chacune des parois latérales comportant une ouverture centrale (22) dans celle-ci, correspondant sensiblement à l'une des extrémités du noyau, la partie postérieure définissant une ouverture refermable (0) au travers de laquelle peut passer le rouleau pendant l'assemblage de l'emballage, et une partie de col plat (24) faisant saillie vers l'avant à partir de la partie antérieure jusqu'à une extrémité distale de celle-ci, définissant une fente de sortie (s) au travers de laquelle peut passer la bande de matériau,
- procurer une paire de douilles à bride (28 ; 100), chacune comprenant une partie cylindrique s'étendant axialement (30) conçue pour s'ajuster étroitement à l'intérieur de l'une des extrémités du noyau, un prolongement cylindrique (34 ; 103) conçu pour s'étendre au travers de l'une desdites ouvertures, et une partie de bride annulaire (32) s'étendant radialement vers l'extérieur à partir de la partie cylindrique afin de faire face axialement à l'extrémité du noyau en étant tournée vers l'intérieur,
- procurer une paire de bagues annulaires (36 ; 102), chacune pouvant être montée par accouplement sur l'une des douilles en relation d'espacement axial étroit avec la partie de bride de celle-ci et en étant tournée vers l'intérieur,
- enfoncer la partie cylindrique de chaque douille en ajustement serré à l'intérieur d'une extrémité respective des extrémités du noyau, de façon que la partie de bride de la douille fasse étroitement face à l'extrémité du noyau,
- introduire le rouleau dans le sachet, au travers de l'ouverture refermable dans sa partie postérieure, et disposer le rouleau dans celui-ci de façon qu'une partie d'extrémité avant (L) de la bande de matériau s'étende vers l'avant jusque dans la partie de col et au dehors au travers de la fente de sortie, et de façon que la douille sur chaque extrémité du noyau soit alignée axialement avec l'ouverture d'une paroi latérale respective des parois latérales, et que les prolongements cylindriques s'étendent au travers des ouvertures, après quoi la partie de bride de chaque douille s'étend en relation de proximité axiale avec une partie annulaire de la paroi latérale respective entourant l'ouverture, et en étant tournée vers l'extérieur,
- monter par accouplement chaque bague annulaire sur un prolongement respectif des prolongements cylindriques en relation de faible espacement axial avec la partie de bride de celui-ci, de façon que chaque bague s'étende à l'extérieur du sachet en relation de faible espacement axial, en étant tournée vers l'intérieur, avec la partie annulaire de la paroi latérale respective, après quoi chaque partie annulaire de paroi latérale est retenue de façon étanche à la lumière entre la partie de bride et la bague s'étendant en relation de proximité axiale face à face avec celle-ci, et ledit noyau, lesdites douilles sur celui-ci, et lesdites bagues sur lesdites douilles peuvent librement tourner par rapport audit sachet, afin de permettre la rotation du rouleau (R) dans la cartouche (42),
- refermer, de façon étanche à la lumière, l'ouverture dans la partie postérieure du sachet, et
- replier la partie de col du sachet, avec la partie d'extrémité avant de la bande de matériau s'étendant au travers de celle-ci, en arrière sur elle-même, et fixer la partie de col repliée en position de rangement contre la partie antérieure du sachet.

6. Procédé selon la revendication 5, comprenant en outre l'étape consistant à :
- déplier et amener la partie de col de sa position de rangement à une position de distribution, dans laquelle la partie de col fait saillie vers l'avant à partir de la partie antérieure, en alignement général avec l'une desdites parties supérieure et inférieure du sachet, afin de distribuer la bande de matériau à partir de celui-ci.

7. Procédé selon la revendication 5, dans lequel :
- ladite étape consistant à procurer les douilles à bride comprend l'étape consistant à munir chaque douille de moyens montés sur celle-ci lui permettant de recevoir en accouplement l'une des bagues annulaires dans ladite relation étroitement espacée dans le sens axial et tournée vers l'intérieur avec la partie de bride,
- ladite étape de montage de chaque bague annulaire comprend l'étape consistant à fixer en accouplement chaque bague auxdits moyens de réception sur le prolongement sensiblement cylindrique faisant saillie au travers de ladite ouverture, de sorte que chaque bague s'étend dans ladite relation de proximité axiale faisant face vers l'intérieur avec la partie annulaire de paroi latérale entourant ladite ouverture, et de sorte que chaque bague et chaque partie de bride opposée peuvent tourner librement ensemble par rapport à ladite partie annulaire de paroi latérale retenue de façon étanche à la lumière entre elles.

8. Procédé selon la revendication 5, dans lequel les étapes consistant à procurer les douilles à bride et à procurer les bagues annulaires comprennent l'étape consistant à former la douille à bride et la bague annulaire à chaque extrémité du noyau, de façon que l'une de ladite douille et de ladite bague à chaque extrémité du noyau comporte une saillie annulaire sur celle-ci s'étendant en direction de l'autre de ladite douille et de ladite bague, et dans lequel ladite autre de ladite douille et de ladite bague comporte un évidement annulaire dans celle-ci faisant face à ladite saillie annulaire et pouvant s'accoupler avec celle-ci afin d'empêcher la lumière de passer entre ladite douille et ladite bague lorsque ladite bague est dans ladite relation étroitement espacée dans le sens axial et tournée vers l'intérieur avec ladite partie de bride de ladite douille.

9. Procédé selon la revendication 5, dans lequel ladite étape consistant à procurer le sachet opaque souple comprend les étapes consistant à :
- former un manchon rectangulaire sensiblement plat (60) à partir d'une feuille de matière plastique opaque, souple, mince, le manchon comprenant une paire de pans latéraux rectangulaires opposés (62) réunis le long de leurs parties inférieure et supérieure s'étendant longitudinalement entre des bords avant et arrière non réunis, les parties inférieure et supérieure et les bords avant définissant ensemble, respectivement, les coins inférieur avant et supérieur avant (72, 74) du manchon,
- replier les parties inférieure et supérieure (64, 66) vers l'intérieur en direction l'une de l'autre entre les pans latéraux,
- enlever une partie de coin inférieur (76) du manchon provenant du coin inférieur avant (72) de celui-ci, en laissant intacte une partie de coin supérieur provenant du coin supérieur avant (74), et réunir les bords des pans latéraux résultant de l'enlèvement de la partie de coin inférieur, en communiquant ainsi à chaque pan latéral une configuration générale en forme de L, comprenant une partie principale, s'étendant entre les bords à présent réunis des pans latéraux et les bords arrière encore non réunis, et une partie étroite s'étendant à partir de la partie principale jusqu'aux bords avant non réunis de la partie de coin supérieur restante,
- enlever une partie circulaire (88), correspondant sensiblement à l'une des extrémités du noyau, d'une zone centrale de chaque partie principale de pan latéral, en ménageant une ouverture circulaire disposée de façon centrale, également correspondante, dans chaque partie principale, et
- écarter les pans latéraux (62) opposés, en dépliant ainsi les parties inférieure et supérieure repliées vers l'intérieur entre ceux-ci, et en procurant ainsi le sachet opaque souple (10), les parties principales des pans latéraux écartés formant les parois latérales du sachet, l'ouverture circulaire dans chaque partie principale procurant l'ouverture centrale dans chaque paroi latérale, les bords arrière toujours non réunis des parties principales écartées procurant la partie postérieure du sachet définissant l'ouverture refermable (10), les bords à présent réunis des parties principales écartées procurant une partie de la partie antérieure du sachet, les parties supérieure et inférieure des pans latéraux à présent dépliées entre les parties principales écartées formant les parties inférieure et supérieure du sachet, respectivement, les parties étroites des pans latéraux écartés et la partie supérieure à présent dépliée entre celles-ci formant ensemble la partie de col (24) du sachet, et leurs bords avant non réunis formant ensemble l'extrémité distale de la partie de col définissant la fente de sortie (s).
